## Europäisches Patentamt

## European Patent Office

## Office européen des brevets

(11) Numéro de publication: **0 196 436**
**B1**

(12) # FASCICULE DE BREVET EUROPEEN

(45) Date de publication du fascicule du brevet:
**12.04.89**

(51) Int. Cl.⁴: **A 23 C 19/032, A 23 C 19/076**

(21) Numéro de dépôt: **86102019.6**

(22) Date de dépôt: **17.02.86**

(54) **Procédé de préparation d'un fromage frais.**

(30) Priorité: **12.03.85 CH 1102/85**

(43) Date de publication de la demande:
**08.10.86 Bulletin 86/41**

(45) Mention de la délivrance du brevet:
**12.04.89 Bulletin 89/15**

(84) Etats contractants désignés:
**AT BE CH DE FR GB IT LI LU NL SE**

(56) Documents cités:
**EP-A- 0 111 020**
**EP-A- 0 144 274**
**CH-A- 623 204**
**FR-A- 2 354 711**
**US-A- 4 262 023**

**JOURNAL OF FOOD SCIENCE, vol. 45, no. 4, juillet-août 1980, pages 794-797 et 801, Chicago, Illinois, US; C.A. PERRY et al.: "Influence of acid related manufacturing practices on properties of cottage cheese curd"**

(73) Titulaire: **SOCIETE DES PRODUITS NESTLE S.A., Case postale 353, CH-1800 Vevey (CH)**

(72) Inventeur: **Sozzi, Tomaso, Ch. des Abeilles 6, CH-1010 Lausanne (CH)**
Inventeur: **Pousaz, Robert, CH-1351 L'Abergement s/Orbe (CH)**
Inventeur: **Hose, Hugh, Entremonts 28, CH-1400 Yverdon (CH)**

ACTORUM AG

## Description

La présente invention a pour objet un procédé de fabrication d'un fromage frais.

Dans la fabrication traditionnelle des fromages frais, on inocule un lait pasteurisé avec une culture de bactéries lactiques se développant à relativement basse température, on ajoute éventuellement de la présure, on incube longuement pour obtenir un caillé essentiellement lactique et l'on égoutte longuement ou l'on centrifuge le caillé. Selon la manière dont le caillé égoutté est repris et additionné de diverses quantités de crème, on obtient divers types de fromages frais plus ou moins gras tels que le petit-suisse p. ex. dont la pâte doit être homogénéisée et lissée pour qu'elle acquière la texture adéquate onctueuse et tartinable. La séparation du lactorésum, lors de la centrifugation ou de l'égouttage entraîne l'élimination de la plus grande partie des composants solubles du lait, notamment le lactose, des vitamines et des protéines de grande qualité.

Afin de ne pas perdre ces divers composants, quelques tentatives ont été faites de fabriquer un produit semblable au fromage, notamment au fromage frais, sans égoutter le caillé. C'est ainsi que dans un procédé connu, on abaisse la teneur en calcium et en magnésium du lait, on ajoute de la crème, on homogénéise, on concentre jusqu'à une teneur en matière sèche de 44%, on pasteurise, on inocule le lait concentré avec une culture de bactéries lactiques et l'on incube dans l'emballage définitif. Quoiqu'ingénieux, ce procédé comporte une étape fondamentale compliquée et onéreuse, à savoir la décationisation, ainsi que l'addition massive de matière grasse, à raison de environ 70% en poids de matière sèche, pour obtenir la texture désirée.

Dans un autre procédé connu, on concentre le lait à la teneur en matière sèche d'un fromage que l'on désire imiter, on ajoute comme agent d'affinage la culture de bactéries lactiques entrant dans la fabrication traditionnelle de ce fromage et l'on coagule à la présure avec l'aide additionnelle d'un peu de chlorure de calcium. La formation d'un tel caillé à la présure est si difficile qu'elle nécessite donc l'addition d'un agent chimique de coagulation tel qu'un sel de calcium. En outre, la haute teneur en lactose de la pâte représente un milieu inhabituellement riche pour la culture d'affinage qui peut provoquer rapidement une suracidification de la pâte.

Enfin, dans un procédé connu de fabrication d'un produit tartinable semblable à un fromage frais à la crème, on propose précisément d'éliminer autant que possible le lactose afin d'éviter les problèmes de suracidification et de fermentation par des levures que l'on peut rencontrer lorsqu'on utilise un lait concentré riche en lactose. Le procédé consiste à acidifier par des bactéries lactiques un mélange de crème et d'une solution de caséine présentant une forte teneur en sel, notamment en sels de fonte.

Selon CH-A 623 204, on décrit un procédé de préparation de fromage frais à haute teneur en matières sèches non grasses du lait par fermentation sans égouttage d'un mélange de composants lactiques pasteurisés ou stérilisés ayant la composition d'un fromage frais après égouttage, avec inoculation de bactéries lactiques juste avant l'emballage, l'équilibre fermentatif ayant lieu dans l'emballage.

EP-A-O 144 274 a trait à la préparation d'un produit frais à saveur de fromage à haute teneur en matières sèches non grasses du lait, par fermentation en plusieurs étapes d'un concentré de lait, successivement au moyen de bactéries thermophiles, puis de bactéries mésophiles et/ou cryophiles.

EP-A-O 111 020 concerne la fabrication de yogourt de babeurre dont la teneur en matières sèches est au plus 14% en poids par culture de Streptococcus cremoris épaississant, – non épaississant et Streptococcus lactis et mélange avec du lait écrémé.

La présente invention a pour but de proposer un procédé de fabrication d'un fromage frais à caillé essentiellement lactique qui contienne tous les composants solubles du lait, qui ne contienne que très peu ou pas du tout de sel ajouté, qui soit stable et ne soit donc pas exposé aux risques de suracidification, qui ait un goût et un arôme acceptables malgré sa haute teneur en lactose et qui présente une texture onctueuse et tartinable indépendamment de sa teneur en matière grasse.

A cet effet, le procédé de fabrication d'un fromage frais selon la présente invention, dans lequel on prépare un lait concentré pasteurisé à 18–35% en poids de matière sèche, le 40% au moins, de préférence le 50% au moins de son poids de matière sèche étant constitué par les solides non gras du lait, est caractérisé par le fait qu'on l'inocule avec une culture comprenant une combinaison de souches de Streptococcus cremoris épaississant, Streptococcus cremoris fort acidifiant et Streptococcus lactis faible acidifiant, et qu'on l'incube à 22–35°C durant 8–30 h jusqu'à pH 4,3–4,8.

On a constaté en effet qu'il était possible de fabriquer un fromage frais présentant les qualités recherchées par acidification d'un lait concentré additionné ou non de matière grasse lactique avec une combinaison adéquate de bactéries lactiques. Après d'innombrables essais avec diverses souches et combinaisons de souches, on a donc trouvé qu'il fallait combiner des souches de Streptococcus cremoris épaississant, Streptococcus cremoris fort acidifiant et Streptococcus lactis faible acidifiant. On a trouvé en particulier que l'on pouvait avantageusement combiner les souches Streptococcus cremoris CNCM I-369, épaississant, Streptococcus cremoris CNCM I-370, fort acidifiant, et Streptococcus lactis CNCM I-371, faible acidifiant.

Ces trois dernières souches ont été déposées en vertu du Traité de Budapest le 21 novembre 1984 à la Collection Nationale de Cultures de Microorganismes (CNCM) de l'Institut Pasteur, 25 rue du Docteur Roux, 75724 Paris Cedex 15, France où elles ont donc reçu les Nos respectifs I-369, I-370 et I-371.

Les trois souches formant la combinaison selon la présente invention ont probablement chacune un rôle distinct et essentiel à jouer dans le processus de formation du caillé lactique. En effet, si l'on n'utilise pas de Streptococcus lactis faible acidifiant dans la combinaison, le fromage frais n'a pas un goût et un arôme acceptables. C'est le goût fade du lactose qui prédomine. Si l'on n'utilise pas de Streptococcus épaississant dans la combinaison, le caillé ne présente pas une texture onctueuse et stable, il est trop cassant et exsude du lactosérum. Si l'on n'utilise pas de Streptococcus cremoris fort acidifiant, l'acidification n'est pas assez poussée, le caillé se forme difficilement et se conserve mal.

Pour mettre en œuvre le procédé selon la présente invention, on prépare donc un lait concentré à 18–35 % en poids de matière sèche, le 40 % au moins, de préférence le 50 % au moins de son poids de matière sèche étant constitué par les solides non gras du lait. Pour ce faire, on peut soit concentrer un lait de vache écrémé ou non, par évaporation sous vide p. ex., soit mélanger de l'eau et/ou du lait de vache avec un lait de vache en poudre, écrémé ou entier, et y ajouter le cas échéant de la crème, notamment de la crème concentrée elle-même par évaporation sous vide, ou de l'huile de beurre. On peut également utiliser d'autres matières grasses, animales ou végétales.

On peut ensuite homogénéiser le lait concentré, après un préchauffage éventuel à 45–70 °C p. ex., sous une pression de environ 200 à 400 bar p. ex. On pasteurise alors le lait concentré pour en éliminer les microorganismes susceptibles d'interférer dans le processus d'acidification subséquent ou de se développer par la suite et de dégrader prématurément le fromage frais. On peut réaliser cette pasteurisation à des températures préférées de environ 75 à 95 °C durant quelques dizaines de s à quelques min, voire quelques dizaines de min p. ex. On peut également utiliser des températures plus élevées et des temps plus brefs.

On peut inoculer le lait concentré pasteurisé avec environ 1–5 % en volume d'une culture comprenant ladite combinaison de souche à raison de environ $10^7$–$10^{10}$, de préférence $10^8$–$10^9$ germes de chacune desdites souches de Streptococcus.

Ladite culture peut comprendre en particulier une combinaison des souches Streptococcus cremoris CNCM I-369, épaississant, Streptococcus cremoris CNCM I-370, fort acidifiant, et Streptococcus lactis CNCM I-371, faible acidifiant.

Si l'on désire augmenter la fermeté de la pâte du fromage frais que l'on obtiendra, on peut ajouter un peu de présure au lait concentré pasteurisé en même temps qu'on lui ajoute la culture comprenant ladite combinaison de souches. Mais la présure ne devrait de préférence pas jouer un rôle dominant dans la formation du caillé qui devrait rester de préférence essentiellement lactique. On incube à une temperature de 22–35 °C favorable à la croissance des présentes souches mésophiles, durant les environ 8–30 h de temps nécessaire pour que ces souches acidifient le lait concentré jusqu'à un pH limite de environ 4,3–4,8 au-delà duquel elles cessent pratiquement toute activité à température ambiante ou sous réfrigération.

On peut incuber en cuve ou directement dans le conditionnement définitif, p. ex. en pots stérilisés et étanches aux microorganismes. Une incubation en cuve permet de mélanger ensuite au fromage divers additifs aromatiques usuels tels que des fines herbes, du poivre ou de l'ail p. ex.

On obtient un fromage frais à pâte onctueuse et tartinable, dont le goût et l'arôme nature sont semblables à ceux du petit-suisse mais qui contient tous les composants solides non gras du lait dans une proportion de au moins 40 à 50 % en poids de sa matière sèche.

Le fromage conditionné est mis de préférence au réfrigérateur où il peut se conserver environ 6 mois à 5 °C. Il peut se conserver également environ 2 mois à 15–20 °C.

Les exemples ci-après sont présentés à titre d'illustration de la présente invention. Les pourcentages y sont donnés en poids sauf indication contraire. Le terme lait y désigne un lait de vache.

Exemple 1

On concentre 100 litres de lait entier par évaporation sous vide jusqu'à une teneur en matière sèche de 28 %. On préchauffe le lait concentré à 70 °C. On l'homogénéise sous 300 bar. On le pasteurise à 80 °C durant 40 s. On le refroidit à 35 °C. On l'inocule en cuve avec 3 % en volume d'une culture de souches mésophiles contenant par $cm^3$ environ $10^8$ germes d'une souche de Streptococcus cremoris épaississant, environ $10^8$ germes d'une souche de Streptococcus cremoris fort acidifiant et environ $10^8$ germes d'une souche de Streptococcus lactis faible acidifiant.

On ajoute 0,2 % de NaCl et l'on incube 20 h à 35 °C. On obtient un fromage frais présentant un pH de 4,4, une texture onctueuse et tartinable, et un arôme frais et lactique semblable à celui du petit-suisse. Sa composition est la suivante:

| | | |
|---|---|---|
| matière sèche | 28 % | |
| protéines | 25,5 % | en poids de matière sèche |
| matière grasse | 29 % | en poids de matière sèche |
| lactose | 39,3 % | en poids de matière sèche |
| cendres | 6,2 % | en poids de matière sèche |

Après conditionnement en pots de 0,25 litres, ce fromage frais garde toutes ses qualités et ne présente en particulier aucune synérèse après une période de conservation de 2 mois à 15 °C.

Exemple 2

On procède de la manière décrite à l'exemple 1, à l'exception du fait que l'on ajoute également de la présure au lait concentré, à raison de 1 ml de présure au 1/10 000 par 100 l de lait concentré. On obtient un fromage frais dont la pâte est plus ferme que celle du fromage décrit à l'exemple 1.

Exemple 3

On mélange 100 litres de lait entier, 47 kg de lait écrémé en poudre, 115 litres de crème à 35 % de matière grasse et 160 kg d'eau. On préchauffe à 45°C et l'on homogénéise ce lait concentré sous 300 bar. On le pasteurise à 80°C durant 30 s et on le refroidit à 35°C. On l'inocule avec 3% en volume d'une culture contenant par cm³ environ 10⁹ germes de Streptococcus cremoris épaississant CNCM I-369, environ 10⁸ germes de Streptococcus cremoris fort acidifiant CNCM I-370 et environ 10⁸ germes de Streptococcus lactis faible acidifiant CNCM I-371. On le conditionne en pots de 0,25 l et l'on incube à 30°C durant 25 h.

On obtient un fromage frais qui présente un pH de 4,4, une texture onctueuse et tartinable, et un arôme semblables à celui du petit-suisse. Sa composition est la suivante:

| | |
|---|---|
| matière sèche | 24% |
| protéines | 22% en poids de matière sèche |
| matière grasse | 44% en poids de matière sèche |
| lactose | 28% en poids de matière sèche |
| cendres | 6% en poids de matière sèche |

Après une période de conservation de 6 mois au réfrigérateur à 5°C, son goût n'est entaché d'aucune amertume ou acidité exagérée et sa pâte n'a laissé sourdre qu'une quantité insignifiante de lactosérum.

Exemple 4

On mélange 300 litres de crème à 15% de matière grasse et 45 kg de lait écrémé en poudre. On préchauffe à 45°C. On homogénéise sous 300 bar, on pasteurise 30 s à 80°C et l'on refroidit à 35°C. On inocule ce lait concentré avec 1% en volume d'une culture contenant par cm³ environ 10⁸ germes de Streptococcus cremoris épaississant CNCM I-369, environ 10⁸ germes de Streptococcus cremoris fort acidifiant CNCM I-370 et environ 10⁹ germes de Streptococcus lactis faible acidifiant CNCM I-371. On le conditionne en pots et l'on incube à 30°C durant 20 h.

On obtient un fromage frais qui présente un pH de 4,7, une texture crémeuse, onctueuse et tartinable, et un arôme frais et lactique de fromage frais à la crème. Sa composition est la suivante:

| | |
|---|---|
| matière sèche | 30% |
| protéines | 18,5% en poids de matière sèche |
| matière grasse | 50% en poids de matière sèche |
| lactose | 26% en poids de matière sèche |
| cendres | 5,5% en poids de matière sèche |

Après une période de conservation de 1 mois à 15°C, il n'a rien perdu de sa fraîcheur et sa pâte ne présente encore aucun début de synérèse.

Exemple 5

On mélange 16 kg de lait écrémé en poudre, 7,5 kg d'huile de beurre et 76 kg d'eau. On préchauffe à 55–60°C, on homogénéise sous 300 bar et l'on pasteurise 30 s à 85–90°C. On inocule ce lait concentré avec 5% en volume d'une culture comprenant une combinaison de souches de Streptococcus cremoris épaississant, Streptococcus cremoris fort acidifiant et Streptococcus lactis faible acidifiant, à raison de environ 10⁸ germes de chaque souche par cm³. On le conditionne en pots et l'on incube 30 h à 25°C.

On obtient un fromage frais qui présente un pH de 4,4, une texture onctueuse et tartinable, et un goût et un arôme semblables à ceux du petit-suisse. Sa composition est la suivante:

| | |
|---|---|
| matière sèche | 23% |
| protéines | 21,6% en poids de matière sèche |
| matière grasse | 37,4% en poids de matière sèche |
| lactose | 34,6% en poids de matière sèche |
| cendres | 6,4% en poids de matière sèche |

Après une période de conservation de 6 mois au réfrigérateur à 5°C il présente des qualités organoleptiques et de texture pratiquement inchangées.

**Revendications**

1. Procédé de fabrication d'un fromage frais dans lequel on prépare un lait concentré pasteurisé à 18–35% en poids de matière sèche, le 40% au moins de son poids de matière sèche étant constitué par les solides non gras du lait, caractérisé par le fait qu'on l'inocule avec une culture comprenant une combinaison de souches de Streptococcus cremoris épaississant, Streptococcus cremoris fort acidifiant et Streptococcus lactis faible acidifiant et qu'on l'incube à 22–35°C durant 8–30 h jusqu'à pH 4,3–4,8.

2. Procédé selon la revendication 1, caractérisé par le fait que le 50% au moins du poids de matière sèche du lait concentré est constitué par les solides non gras du lait.

3. Procédé selon la revendication 1, caractérisé par le fait que l'on homogénéise le lait concentré avant de le pasteuriser.

4. Procédé selon la revendication 1, caractérisé par le fait que l'on inocule le lait concentré avec 1–5% en volume d'une culture contenant par cm³ environ 10⁷–10¹⁰ germes de chacune desdites souches de Streptococcus.

5. Procédé selon la revendication 1, caractérisé par le fait que ladite culture comprend une combinaison des souches Streptococcus cremoris CNCM I-369, épaississant, Steptococcus cremoris CNCM I-370, fort acidifiant et Streptococcus lactis CNCM I-371, faible acidifiant.

**Patentansprüche**

1. Verfahren zur Herstellung von Frischkäse, in welchem Verfahren eine konzentrierte, pasteurisierte Milch mit 18 bis 35 Gew.-% Trockenmaterial bereitet wird, wobei wenigstens 40% ihres Gewichtes an Trockenmaterial aus Milchnichtfettfeststoffen gebildet sind, dadurch gekennzeichnet, daß man die Milch mit einer Kultur beimpft, die eine Kombination von Stämmen von verdickendem Streptococcus cremoris, stark ansäuerndem Streptococcus cremoris und schwach ansäuerndem Streptococcus lactis umfaßt und daß man die Milch bei 22 bis 35°C 8 bis 30 Stunden lang bis auf einen pH-Wert von 4,3 bis 4,8 inkubiert.

2. Verfahren nach Anspruch 1, dadurch gekennzeichnet, daß wenigstens 50% des Gewichtes des Trockenmaterials der konzentrierten Milch aus Milchnichtfettfeststoffen bestehen.

3. Verfahren nach Anspruch 1, dadurch gekennzeichnet, daß man die konzentrierte Milch homogenisiert, bevor sie pasteurisiert wird.

4. Verfahren nach Anspruch 1, dadurch gekennzeichnet, daß man die konzentrierte Milch mit 1 bis 5 Volums-% einer Kultur beimpft, die je cm$^3$ ungefähr 10$^7$ bis 10$^{10}$ Keime jedes der genannten Streptococcus-Stämme enthält.

5. Verfahren nach Anspruch 1, dadurch gekennzeichnet, daß die genannte Kultur eine Kombination aus verdickenden Stämmen Streptococcus cremoris CNCM I-369, stark ansäurenden Stämmen Streptococcus cremoris CNCM I-370 und schwach ansäuernden Stämmen Streptococcus lactis CNCM I-371 umfaßt.

**Claims**

1. A process for producing a fresh cheese comprising preparing a concentrated, pasteurized milk having a dry matter content of 18–35% by weight of which at least 40% by weight of the dry matter content is non-fat milk solids, characterized by first inoculating it with a combination of strains of thickening Streptococcus cremoris, strongly acidifying Streptococcus cremoris and mildly acidifying Streptococcus lactis and then incubating it at 22–35°C for 8–30 h to obtain a pH 4.3–4.8.

2. A process according to claim 1, characterized by at least 50% by weight of the dry matter content being non-fat milk solids.

3. A process according to claim 1, characterized by homogenizing the concentrated milk before pasteurizing it.

4. A process according to claim 1, characterized by inoculating the concentrated milk with 1–5% by volume of a culture containing per cm$^3$ approximately 10$^7$–10$^{10}$ germs of each of said strains of Streptococcus.

5. A process according to claim 1, characterized by the fact that said culture comprises a combination of the strains thickening Streptococcus cremoris CNCM I-369, strongly acidifying Streptococcus cremoris CNCM I-370 and mildly acidifying Streptococcus lactis CNCM I-371.